# NEW EUROPEAN PATENT SPECIFICATION

(11) **EP 0 606 957 B2**
(45) Date of publication and mention of the opposition decision: **12.03.2008**
(45) Mention of the grant of the patent: 22.12.1999
(21) Application number: 94200075.3
(22) Date of filing: 13.01.1994
(51) Int. Cl.: C22B 34/22, C01G 31/02, C01B 3/36, C10J 3/84

(54) **Carbon burn-off process**
Verfahren zur Kohlenstoffentfernung durch Röstern
Procédé d'élimination de carbone par grillage

(30) Priority: 14.01.1993 EP 93200092
(43) Date of publication of application: 20.07.1994
(73) Proprietor: SHELL INTERNATIONALE RESEARCH MAATSCHAPPIJ B.V., 2596 HR Den Haag (NL)
(72) Inventor: Tils, Henricus Martinus G.C., NL-1031 CM Amsterdam (NL)

(56) References cited:
- EP-A- 0 542 322
- EP-A- 0 606 669
- DE-A- 2 048 609
- DE-A- 2 718 404
- DE-A- 4 137 320
- DE-A- 4 213 328
- FR-A- 2 348 979
- FR-A- 2 505 808
- GB-A- 2 026 458
- US-A- 4 203 759
- US-A- 4 477 416

## Description

The present invention relates to a process for burning off carbon, and in particular to a process for converting soot obtainable by a gasification process.

It is well known that carbonaceous materials are produced in rather high amounts in various operations carried out commercially in industry, in particular in the oil industry. Examples of such operations comprise the heating of hydrocarbonaceous materials in furnaces, inevitably leading to carbonaceous deposits in various parts of the furnaces and transfer lines to other equipment; the well known catalytic cracking processes which are normally operated under conditions which allow deposit of carbonaceous materials on the catalytic particles which have then to be subjected to a regeneration treatment, as well as gasification processes such as gas, oil and coal gasification.

In the oil and coal gasification processes carbonaceous materials, often referred to as soot, are unavoidably produced. They are left over as residual carbon once the waste heat recovery step, following the gasification proper, has been operated with a view to produce high pressure steam. The reactor outlet gases from the waste heat recovery contain such residual carbon which is normally removed by a (multiple) water wash from said gas which is collected as clean gas.

A number of techniques are known in the art to deal with the soot produced in a gasification process. A well known and commercially applied technique comprises a pelletising process in which a distillate or a residual fuel oil is used to form agglomerates which can be separated from the wash water. This process is in essence a wet process, producing carbon pellets which can be remixed with feedstock or heavy fuel oil and, if necessary after homogenising, recycled to the gasification reactor or used as fuel.

Another possibility to process carbonaceous materials produced comprises the so-called Naphtha-Soot Recovery Process which is especially suitable for processing soot produced by gasification of heavy feedstocks such as visbroken residue or various kinds of asphalt. Again, a carbonaceous slurry is produced but after subjecting it to an aqueous washing treatment it is then subjected to a treatment with naphtha in an extractor, thus producing naphtha-soot agglomerates. Such agglomerates are separated from water present and subsequently converted into a pumpable mixture with the feedstock.

Since the removal of residual carbonaceous material, such as soot, appears to be a very expensive part of a total gasification process there is a large incentive for cheaper and more efficient ways of processing such residual materials. There is moreover, an inherent problem in upgrading vanadium containing residual materials (which is normally the case when processing rather heavy feedstocks, and which is becoming progressively more problematic when producing feedstocks containing relative large amounts of vanadium-containing components) in that under the upgrading conditions vanadium containing materials are converted into vanadium pentoxide which has the disadvantage that it renders the product rather sticky which makes it very difficult and uneconomic to handle.

From EP-A-0 542 322 and DE-A-4 213 328 a process is known for converting soot containing partially oxidized vanadium, obtainable by a gasification process, comprising subjecting such soot to an oxidizing treatment which is carried out under such conditions that the amount of vanadium pentoxide in the final product is 0% by weight.

The residue is treated in a multiple hearth furnace at a low oxygen concentration.

It has now been found that it is possible to upgrade vanadium-containing residual materials, for instance residual materials obtained by a gasification process using vanadium containing feedstocks in such a way that the production of unwanted vanadium pentoxide is reduced substantially or even almost prevented. This makes the upgrading process much more flexible in terms of handling and further processing, if desired.

This process is carried out in a hearth furnace at a temperature of the reacting layer, which is between 700 °C and 900 °C. It should be noted that surprisingly good results are obtained when operating at a temperature which is above the melting point of vanadium pentoxide; in other words, no adverse effects are observed when operating under a temperature regime in which vanadium pentoxide is normally present in liquid form which will favour stickiness.

It has been found that the process is best carried out under conditions which leave a substantial amount of oxygen in the gaseous effluent emanating from the first or from the uppermost hearth of the reactor. Suitably, the gaseous effluent contains at least 12% by volume of oxygen, calculated on air under standard conditions of temperature and pressure.

The present invention therefor relates to a process for the conversion, substantially into carbon monoxide and carbon dioxide of soot containing relatively large amounts of partially oxidized vanadium, obtainable from a gasification process, comprising subjecting such soot to an oxidizing treatment in a multiple hearth furnace at a temperature of the reacting layer between 700 °C and 900 °C, and in which the gaseous effluent emanating from the first or from the upper most hearth of the reactor contains at least 12% volume of oxygen calculated on air under standard conditions of temperature and pressure and which is carried out under such conditions that the amount of vanadium pentoxide in the final product is at most 30% by weight, calculated on partially oxidized vanadium present in the soot.

The expression soot containing partially oxidized vanadium is meant to be understood as referring to carbonaceous materials left over after thermal or catalytic treatment of vanadium containing feedstocks. Such feedstocks may have been subjected to a simple thermal treatment, for instance by heating them in a furnace to produce heat and possibly cracked products or may have been subjected to a gasification process in which they have been converted into one or more valuable gaseous materials leaving soot formed as unavoidable byproduct under the process conditions.

During the thermal or catalytic treatment of the vanadium containing feedstocks referred to hereinabove, vanadium or vanadium-containing components present in the feedstock may have been converted into partially oxidized vanadium components. The process according to the present invention is eminently suitable for converting soot containing up to 30% by weight of vanadium pentoxide, but lower amounts of vanadium pentoxide can be processed equally well.

The process according to the present invention in very surprising in that it is capable of treating soot under oxidizing conditions during which carbonaceous materials are converted substantially into carbon monoxide and carbon dioxide without oxidizing partially oxidized vanadium compounds present therein into substantial amounts of vanadium pentoxide which is to be expected when subjecting such materials to an oxidizing atmosphere.

The process according to the present invention is in particular suitable for converting partially oxidized vanadium containing soot by burning off the carbonaceous material whilst the amount of vanadium pentoxide present in the final product is at most 25% by weight, and most preferably less than 15% by weight, calculated on partially oxidized vanadium present in the soot to be subjected to the oxidizing treatment.

Without wishing to be bound to any particular theory it is believed that the process according to the present invention accomplishes a reaction regime in which the amount of oxygen introduced into the reactor is much larger than that actually available when combusting the carbonaceous material into carbon monoxide and carbon dioxide. It would appear that the local presence of the oxidizing agent is governing the processes featuring in the carbon burn-off process and that a rather limited amount of oxidizing agent in the vicinity of the partially oxidized vanadium compounds prevents full oxidation of such compounds into thermodynamically favoured vanadium pentoxide.

Generally, it can be said, that according to the present invention the oxygen mass transfer rate towards the carbonaceous layer, where the burn-off takes place, should be significantly lower than the carbon burn-off reaction rate in terms of oxygen consumption.

The invention according to the present invention is carried out in a so-called multiple hearth furnace. Multiple hearth furnaces are known under various names, for instance as the Herreshoff and the Pacific multiple hearth furnace. Reference is made to Perry's Chemical Engineers' Handbook, 6th Edition, 1984, Section 20-46.

It will be appreciated that hearth furnace can have any diameter suitable for the purpose.

Generally, it can be said that the behaviour of such furnaces is a function of feed composition, process conditions and geometry of the furnace.

Such furnaces consist of a number, e.g. up to 10, of annular-shaped hearths mounted one above the other. There are raking arms on each hearth driven from a common shaft located in the centre of the furnace. The feed is charged at or near the centre of the upper hearth. The arms move the charge outward to the periphery, where it falls to the next (lower) hearth. It is then moved again to the centre, from which it falls to the next lower hearth. Finally the charge reaches the bottom hearth and is removed from the furnace.

Inlets for the oxidizing agents, suitably air, can be located at the sides of the appropriate hearths. Depending on the distance above the carbonaceous material present on the hearths, the speed of the raking arms present in the carbonaceous materials and the geometry of the inlets for the oxidizing agent(s) to be used, the degree of conversion, and therefore the level of vanadium pentoxide, can be controlled and adjusted if necessary. It has been found that exceptionally good results can be obtained when the surface layer of the carbonaceous material is being subjected to the treatment with the oxidizing agent. When operating the multiple hearth furnace in this manner the amount of partially oxidized vanadium remains surprisingly high, calculated on partially oxidized vanadium present in the carbonaceous material to be subjected to carbon burn-off.

The process according to the present invention can be suitably applied when using so-called filter-cakes, comprising up to 35% by weight of soot in water or another appropriate liquid carrier. Such filter-cakes can be obtained, as explained hereinbefore, in the gasification of heavy carbonaceous materials such as residual materials from an oil gasification process. The filter-cakes can contain up to 70% by weight of partially oxidized vanadium (on dry basis), depending on the feedstock which has been used in the soot-forming process. Preferably, the filter-cakes contain up to 35% by weight of partially oxidized vanadium (on dry basis).

It is also possible to operate the present process with dry soot. Dry soot is normally obtained from thermal conversion processes and has not been subjected to a wash treatment. Again, the process according to the present invention can be carried out eminently when using soot containing up to 70% by weight of partially oxidized vanadium, depending on the feedstock which has been used in the thermal conversion process. Preferably, the dry soot contains up to 35% by weight of partially oxidized vanadium.

It has been found that the process according to the present invention is better carried out if the gaseous effluent contains more than 15% by weight of oxygen.

If desired, the process according to the present invention can be carried out in the presence of a moderator. This means that part of the oxidizing agent can be replaced by steam, nitrogen or carbon dioxide, or a mixture of steam, nitrogen and/or and carbon dioxide. It is thought that the presence of a moderator allows operating at a lower temperature.

It has further been found that the process according to the present invention is carried out very successfully when the ratio between the mass transfer coefficient of the oxidizing agent and the rate constant of carbon combustion is smaller than 0.1, in particular when this ratio is smaller than 0.01.

The process according to the present invention is preferably used as part of an integrated process for the conversion of hydrocarbons which are liquid under standard conditions of temperature and pressure by converting such hydrocarbons containing vanadium into raw synthesis gas in the presence of oxygen and a moderating agent in a partial oxidation reactor, generating high temperature steam from the hot gases leaving the reactor and removing remaining residual carbon contained in the reactor outlet gas by means of one or more washing steps, and subjecting the partially oxidized vanadium containing soot to an oxidizing treatment in accordance with the present invention.

The process according to the present invention can be suitably applied in the SHELL Gasification Process (SGP) which is a non-catalytic partial oxidation process with which a wide variety of hydrocarbonaceous feedstocks can be converted into synthesis gases comprising mainly hydrogen and carbon monoxide which can be used in many industrial applications such as the production of ammonia, methanol, hydrogen, oxo-alcohols, fuel gas, reduction gas and town gas. Also combinations of various processes can be considered such as ammonia and methanol or methanol and hydrogen.

If desired the partially oxidized vanadium produced in the process according to the present invention can be used in further operations as it constitutes a valuable feedstock for the metallurgical industry.

The invention will now be described by way of example in more detail by reference to the following examples.

As already indicated in the foregoing, the conditions in a hearth furnace should be such that there is a low oxygen transfer to the carbonaceous layer, where the burn-off takes place, in comparison to the burn-off reaction rate.

### EXAMPLE 1 (not according to the invention)

A batch of 20 kg vanadium rich soot filtercake containing about 20% solids by weight was dried in a single hearth furnace having a diameter of 0.46 m at about 500 °C. The carbon was burnt-off at a (flue) gas temperature of about 550 °C. The combustion air inlet was positioned above the cake bed. The oxygen content of the flue gas was about 19% O₂. The combustion was observed to take place at the glowing top layer of the cake. The temperature of the top layer was about 770 °C. The bulk solids layer temperature was about 530 °C. In the bulk layer itself no reaction was observed. The vanadium in the product ash was found to be present as V₂O₄. V₂O₅ was not found.

### EXAMPLE 2

Vanadium rich soot filtercake containing about 20% solids by weight was continuously processed in a multiple hearth furnace having a diameter of 0.9 m at a rate of about 30 kg/hr. The furnace comprised 6 hearths. The burn-off took place at hearth number three to six. The combustion air above the cake on the hearths contained about 15% O₂. The temperature of the air was about 580 °C. The inlets of fresh combustion air were positioned above the cake. The burn-off took place at the glowing top layer of the cake on every burn-off hearth. The temperature of the layer ranged from 720 °C to 780 °C. The temperature of the solids underneath that layer was about 600 °C. No reaction was observed in that part of the cake. The vanadium in the product ash was found to be present as V₂O₄. V₂O₅ was not found.

### EXAMPLE 3

An investigation has been carried out related to the burn-off process taking into account both the carbon burn-off reaction rate and the mass transfer of oxygen from the air to the cake. Also heat transfer phenomena are accounted for. Information has been obtained on the total conversion and surface temperatures of the soot filter cake and on the temperature, oxygen and carbon concentration profile in the cake during the whole combustion process. It is found that under conditions as applied in the examples 1 and 2 mentioned above the reaction takes place only at the top of the cake at temperatures in the order of 700 °C-900 °C. The rest of the cake remains "colder". The oxygen content in this "cold" part of the cake is so low that no reaction is observed.

In particular, the combustion of vanadium-rich soot filter cake containing 21.2% solids by weight has been investigated. This filter cake is continuously processed in any suitable multiple hearth furnace (having a diameter of e.g. 0.9 m) at a rate of 30 kg/h. The air above the cake contains between 11.6% and 16% O₂.

The temperature of the air above the cake is in the range of 540 °C to 650 °C.

The temperatures at which the oxidation reaction takes place in the top of the cake, are in the range of about 600 °C to about 1170 °C.

It appears that oxygen hardly penetrates into the cake because of the fast reaction of carbon with oxygen in comparison to the mass transfer of oxygen.

These results illustrate that the reaction only takes place at the top of the filter cake.

Various modifications of the present invention will become apparent to those skilled in the art from the foregoing description and examples. Such modifications are intended to fall within the scope of the appended claims.

## Claims

1. Process for the conversion, substantially into carbon monoxide and carbon dioxide of soot containing relatively large amounts of partially oxidized vanadium, obtainable by a gasification process, comprising subjecting such soot to an oxidizing treatment in a multiple hearth furnace at a temperature of the reacting layer between 700 and 900 °C, and in which the gaseous effluent emanating from the first or from the upper most hearth of the reactor contains at least 12% by volume of oxygen calculated on air under standard conditions of temperature and pressure and the amount of vanadium pentoxide in the final product is at most 30% by weight, calculated on partially oxidized vanadium present in the soot.

2. Process according to claim 1, in which soot containing up to 70% by weight (on a dry basis), of partially oxidized vanadium is subjected to the oxidizing treatment.

3. Process according to claim 2, in which soot containing up to 35% by weight (on a dry basis), of partially oxidized vanadium is subjected to the oxidizing treatment.

4. Process according to one or more of claims 1 to 3, in which substantially dry soot is subjected to the oxidizing treatment.

5. Process according to one or more of claims 1 to 4, in which the oxidizing treatment is carried out in such a way that the amount of vanadium pentoxide in the final product is at most 25% by weight calculated on partially oxidized vanadium present in the soot.

6. Process according to claim 5, in which the oxidizing treatment is carried out in such a way, that the amount of vanadium pentoxide in the final product is less than 15% by weight calculated on partially oxidized vanadium present in the soot.

7. Process according to one or more of claims 1 to 6, in which the gaseous effluent contains more than 15% by volume of oxygen, calculated on air under standard conditions of temperature and pressure.

8. Process according to one or more of claims 1 to 6, in which process the oxidizing treatment is carried out in the presence of a moderator.

9. Process according to claim 8, in which process steam, nitrogen or carbon dioxide is used as a moderator.

10. Process according to one or more of claims 1 to 9, in which process the oxidizing treatment is carried out under conditions which render the ratio between the mass transfer coefficient of the oxidizing agent and the rate constant of carbon combustion < 0.1.

## Patentansprüche

1. Verfahren zur Umwandlung von Ruß, der verhältnismäßig große Mengen an partiell oxidiertem Vanadium enthält und der aus einem Vergasungsverfahren erhältlich ist, im wesentlichen zu Kohlenmonoxid und Kohlendioxid, welches Verfahren ein Ausführen einer Oxidationsbehandlung an einem solchen Ruß in einem Mehretagenofens bei einer Temperatur der Reaktionsschicht zwischen 700°C und 900°C umfasst und worin der aus dem ersten oder aus dem obersten Etage des Reaktors austretende gasförmige Abstrom wenigstens 12 Vol.-% Sauerstoff, berechnet auf Luft unter Standardbedingungen hinsichtlich Temperatur und Druck, enthält und welches Verfahren unter solchen Bedingungen ausgeführt wird, dass die Vanadiumpentoxidmenge in dem Endprodukt höchstens 30 Gew.-% beträgt, berechnet auf partiell oxidiertes, in dem Ruß vorliegendes Vanadium.

2. Verfahren nach Anspruch 1, worin ein bis zu 70 Gew.-% (auf Trockenbasis) partiell oxidiertes Vanadium enthaltender Ruß der Oxidationsbehandlung unterworfen wird.

3. Verfahren nach Anspruch 3, worin ein bis zu 35 Gew.-% (auf Trockenbasis) partiell oxidiertes Vanadium enthaltender Ruß der Oxidationsbehandlung unterworfen wird.

4. Verfahren nach einem oder mehreren der Ansprüche 1 bis 3, worin im wesentlichen trockener Ruß der Oxidationsbehandlung unterworfen wird.

5. Verfahren nach einem oder mehreren der Ansprüche 1 bis 4, worin die Oxidationsbehandlung derart ausgeführt wird, dass die Vanadiumpentoxidmenge in dem Endprodukt höchstens 25 Gew.-%, berechnet auf das im Ruß vorliegende partiell oxidierte Vanadium, beträgt.

6. Verfahren nach Anspruch 5, worin die Oxidationsbehandlung derart ausgeführt wird, dass die im Endprodukt vorliegende Vanadiumpentoxidmenge weniger als 15 Gew.-%, berechnet auf das im Ruß vorliegende partiell oxidierte Vanadium, beträgt.

7. Verfahren nach einem oder mehreren der Ansprüche 1 bis 6, worin der gasförmige Abstrom mehr als 15 Vol.-% Sauerstoff, berechnet auf Luft unter Standardbedingungen von Temperatur und Druck, enthält.

8. Verfahren nach einem der Ansprüche 1 bis 6, in welchem Verfahren die Oxidationsbehandlung in Gegenwart eines Moderierungsmittels ausgeführt wird.

9. Verfahren nach Anspruch 8, in welchem Verfahren Dampf, Stickstoff oder Kohlendioxid als Moderierungsmittel verwendet wird.

10. Verfahren nach einem oder mehreren der Ansprüche 1 bis 9, in welchem Verfahren die Oxidationsbehandlung unter Bedingungen ausgeführt wird, die das Verhältnis zwischen dem Massentransferkoeffizienten des Oxidationsmittels und der Geschwindigkeitskonstante der Kohlenstoffverbrennung kleiner als 0,1 machen.

## Revendications

1. Procédé pour la conversion, essentiellement en monoxyde de carbone et dioxyde de carbone de suie contenant des quantités relativement importantes de vanadium partiellement oxydé, obtenable d'un procédé de gazéification, qui consiste à soumettre cette suie à un traitement d'oxydation dans un four à plusiours é etages à une température de la couche réagissante entre 700°C et 900°C, et dans lequel l'effluent gazeux émanant de la première etage ou de la etage supérieure du réacteur contient au moins 12 % d'oxygène calculés sur la base d'air sous des conditions standards de température et de pression et la quantité de pentoxyde de vanadium dans le produit final est de tout au plus 30 % en poids, calculés sur le vanadium partiellement oxydé présent dans la suie.

2. Procédé suivant la revendication 1, dans lequel de la suie contenant jusqu'à 70 % en poids (sur une base sèche), de vanadium partiellement oxydé est soumise au traitement oxydant.

3. Procédé suivant la revendication 2, dans lequel de la suie contenant jusqu'à 35 % en poids (sur une base sèche), de vanadium partiellement oxydé est soumise au traitement oxydant.

4. Procédé suivant une ou plusieurs des revendications 1 à 3, dans lequel une suie pratiquement sèche est soumise au traitement oxydant.

5. Procédé suivant l'une quelconque des revendications 1 à 4, dans lequel le traitement oxydant est réalisé d'une manière telle que la quantité de pentoxyde de vanadium dans le produit final est tout au plus de 25 % en poids, calculés sur le vanadium partiellement oxydé présent dans la suie.

6. Procédé suivant la revendication 5, dans lequel le traitement oxydant est réalisé d'une manière telle que la quantité de pentoxyde de vanadium dans le produit final est inférieure à 15 % en poids, calculés sur le vanadium partiellement oxydé dans la suie.

7. Procédé suivant l'une quelconque des revendications 1 à 6, dans lequel l'effluent gazeux contient plus de 15 % en poids d'oxygène, calculés sur la base d'air sous des conditions standards de température et de pression.

8. Procédé suivant une ou plusieurs des revendications 1 à 6, procédé dans lequel le traitement oxydant est réalisé en présence d'un modérateur.

9. Procédé suivant la revendication 8, procédé dans lequel on utilise de la vapeur, de l'azote ou du dioxyde de carbone comme modérateur.

10. Procédé suivant l'une quelconque des revendications 1 à 9, procédé dans lequel e traitement oxydant est réalisé sous des conditions qui rendent le rapport entre le coefficient de transfert de masse de l'agent oxydant et la constante de vitesse de la combustion de carbone <0,1.
